# FASCICULE DE BREVET EUROPEEN

(11) **EP 2 162 324 B1**
(45) Date de publication et mention de la délivrance du brevet: **25.05.2011**
(21) Numéro de dépôt: 08805960.5
(22) Date de dépôt: 09.06.2008
(51) Int. Cl.: B60S 3/04

(54) **MODULE DE TUNNEL DE LAVAGE**
MODUL FÜR WASCHTUNNEL
MODULE FOR WASHING TUNNEL

(30) Priorité: 15.06.2007 FR 0755774
(43) Date de publication de la demande: 17.03.2010
(73) Titulaire: Tunnel de Lavage, 10000 Troyes (FR)
(72) Inventeur: DUTERME, Claude, F-10000 Troyes (FR)
(74) Mandataire: Herrburger, Pierre
(86) Numéro de dépôt international: PCT/FR2008/051025
(87) Numéro de publication internationale: WO 2009/004210

(56) Documents cités:
- FR-A- 2 875 198
- JP-A- 2004 122 955
- US-A- 3 604 630
- US-E1- R E37 830

## Description

### Domaine de l'invention

La présente invention concerne un module de tunnel de lavage composé d'une structure en forme d'arceau constituant un caisson, logeant l'alimentation en eau, l'alimentation en produits de prélavage/lavage, une armoire électrique de commande, une pompe de produits, un mousseur et une conduite de distribution de mousse équipée de buses de pulvérisation. Un tel module est connu du document US RE 37 830 E.

### Etat de la techniques

On connaît déjà des tunnels de lavage composés de modules en forme d'arceau se succédant les autres les uns les autres dans l'alignement du tunnel de lavage sur le passage des voitures pour assurer chacun une fonction particulière, par exemple comme cela est décrit dans le document FR 04 52 036 (FR 2 875 198).

Ces fonctions de lavage sont assurées actuellement par des modules dont l'utilisation manque de souplesse et ne permet pas d'obtenir de mousse de qualité et de le distribuer efficacement pour le nettoyage et la préparation d'une carrosserie de véhicule.

Dans ce type de tunnel, les fonctions de lavage haute pression, de lavage haute pression avec des rouleaux et de lavage haute pression avec lustrage sont des fonctions distinctes.

A titre d'exemple, le lavage haute pression se compose d'une phase de prélavage avec projection de mousse lustrante puis passage dans des jets à haute pression suivi d'un rinçage et d'un séchage. La fonction ou programme de lavage haute pression avec lavage à rouleaux consiste à faire un prélavage suivi d'une phase avec des jets à haute pression suivi d'un passage sous des rouleaux avec eau et shampooing suivi éventuellement d'un passage sous d'autres rouleaux avec projection d'eau et de shampooing, puis rinçage et séchage. Dans le cas du programme de lavage à haute pression avec lustrage, on a un prélavage suivi d'une projection à haute pression ; ensuite on distribue une mousse lustrante et on passe sous des rouleaux à sec. Une seconde distribution de mousse lustrante est suivie d'un traitement avec des rouleaux à sec. Enfin, on applique une mousse lustrante avec des rouleaux lustrants puis on rince et on sèche.

Ces fonctions ou programmes peuvent avoir des sous-programmes consistant à supprimer certaines phases ou à les modifier. Les différentes distributions de produits de prélavage, lavage ou lustrage sont assurées par des modules dans lesquels passe le véhicule.

### But de l'invention

La présente invention a pour but de développer un module de tunnel de lavage du type défini ci-dessus assurant la distribution de mousse, voire de liquide sur le passage d'une voiture pour assurer efficacement son entretien et son nettoyage, avec des moyens simples et efficaces, permettant une bonne préparation de la mousse et une réalisation efficace de l'ensemble du tunnel de lavage.

### Exposé et avantages de l'invention

A cet effet, la présente invention concerne un module de tunnel de lavage du type défini ci-dessus caractérisé en ce que
- la rampe de distribution de mousse est en deux branches de distribution, symétriques, associées chacune à une moitié du module, chacune des branches comprenant une conduite de grand diamètre partant du mousseur à la base à l'intérieur du montant, et
- une conduite à l'extérieur, en façade du module, partant de la base du montant jusque sur la traverse formant la branche de distribution munie de buses de distribution de mousse.

Le module selon l'invention permet d'obtenir une mousse particulièrement efficace grâce à la préparation du mélange eau/produit, en amont du mousseur sur le trajet relativement long entre l'arrivée d'eau en partie supérieure du module et de l'injection à cet endroit du produit. En sortie de mousseur, le segment de conduite de forte section, permet de recevoir la mousse sans la casser pour la distribuer dans de bonnes conditions dans la rampe et par les pulvérisateurs sur le véhicule.

Cette excellente préparation de la mousse permet non seulement un travail efficace mais également une économie de produit, favorable à l'économie de fonctionnement du tunnel de lavage et réduisant la pollution.

Suivant une autre caractéristique, l'alimentation en eau se fait par le dessus du module au niveau de la traverse et comprend, dans le sens d'arrivée de l'eau, un branchement sur la conduite générale avec une vanne d'arrêt et un clapet anti-retour suivis d'un té relié aux deux branches, chaque branche ayant une électrovanne suivie d'une vanne de réglage de débit,
un embranchement d'arrivée de produit en aval de l'électrovanne et en amont de la vanne de réglage,
un embranchement d'arrivée d'air comprimé en aval de la vanne de réglage et en amont du mousseur.

La répartition du mélange eau/produit entre les deux parties symétriques du module, permet de bien équilibrer les débits et de produire la mousse pratiquement près de l'endroit où la mousse est pulvérisée. De plus et suivant une caractéristique avantageuse, la conduite reliant le mousseur au connecteur à l'intérieur du montant du module est une conduite de grand diamètre, transparente qui permet de contrôler visuellement l'état de la mousse et de régler cet état (densité) en jouant sur l'alimentation en air par la vanne de réglage d'air. De plus, ce connecteur de grand diamètre permet de maintenir le débit de mousse pratiquement constant pour ne pas constituer un point d'étranglement susceptible de réduire la qualité de la mousse ou de la casser avant que la mousse n'arrive sur les pulvérisateurs.

Suivant une autre caractéristique avantageuse, une alimentation en produit ayant une pompe commandée, reliée par un bidon de produit et débitant celui-ci de façon commandée par deux conduites respectives munies chacune d'un clapet anti-retour (AR-P) et d'une vanne de réglage.

Suivant une autre caractéristique avantageuse, une alimentation en air comprimé partant de la conduite générale par un embranchement muni d'une vanne d'arrêt et d'une électrovanne puis d'un té relié à deux conduites respectives, associées chacune à une branche, et munies chacune d'un clapet anti-retour et d'une vanne de réglage pour déboucher dans la conduite dans laquelle passe le mélange eau + produit.

L'alimentation commandée en eau et en air comprimé avec les vanne de réglage et les clapets anti-retour permet un fonctionnement en toute sécurité évitant le refoulement d'eau éventuellement chargée de produit dans la conduite générale. De plus, cela permet un fonctionnement séquentiel des différents modules du tunnel, sans perte de produit.

Suivant une autre caractéristique avantageuse, une cheminée fixée à la traverse sur le dessus du module assure la liaison avec un chemin de distribution installé au-dessus du tunnel de lavage pour le passage de la conduite d'eau, des câbles d'alimentation électriques et des câbles de commande, une dérivation étant prévue chaque fois pour passer dans la cheminée et entrer dans le module.

Suivant une autre caractéristique avantageuse, la conduite formant la branche de distribution de mousse en façade du module est réalisée en matière plastique transparente. Elle permet de voir le passage de la mousse d'en contrôler l'état à cet endroit et, le cas échéant, de visualiser la mousse si celle-ci est colorée, pour la distinguer en fonction de la nature du travail à effectuer.

Suivant une autre caractéristique avantageuse, le module comporte deux rampes de distribution de mousse, installées en parallèle et de manière décalée en façade pour distribuer, chacune une mousse de fonction différente, chaque rampe étant formée de deux branches distinctes, symétriques.

Ce module équipé de deux rampes de distribution augmente la souplesse de fonctionnement du tunnel de lavage et peut être utilisé pour deux fonctions en alternance, pour distribuer deux types de mousse.

Suivant une autre caractéristique avantageuse, le module est formé d'un assemblage d'éléments en acier inox. Ce mode de réalisation simplifie la fabrication, le transport et l'installation d'un module et par suite d'un tunnel de lavage, la fabrication et réduit l'entretien.

Suivant une autre caractéristique avantageuse, les buses de distribution de mousse sont formées d'un support de base fixé à la conduite et d'un corps de buse amovible fixe du support de base.

Ce mode de réalisation des buses permet d'une part de simplifier l'installation et le montage et d'autre part, d'adapter chaque rampe de distribution à un certain type de mousse et/ou de pulvérisation, pour modifier la forme du jet de mousse, son orientation et son intensité.

### Dessins

La présente invention sera décrite ci-après de manière plus détaillée à l'aide d'un mode de réalisation d'un module de tunnel de lavage en forme d'arceau, représenté schématiquement dans les dessins annexés dans lesquels :
- la figure 1 est une vue de face d'un module,
- la figure 2 est une vue de dessus du module de la figure 1,
- la figure 3 est un schéma d'alimentation et de commande des mousseurs des deux branches de distribution de mousse,
- la figure 4 est une vue de face d'une variante de réalisation du module,
- la figure 5 est une vue de dessus du module de la figure 4,
- la figure 6 est une vue en coupe d'une branche de distribution de mousse et d'un pulvérisateur,
- la figure 7 montre dans ses parties A et B, une vue de face d'un connecteur et une vue en coupe axiale de celui-ci,
- la figure 8 montre dans ses parties A et B, une vue de face et une vue en coupe d'une variante de réalisation de connecteur,
- la figure 9 montre l'assemblage de deux connecteurs associés à deux branches de distribution de mousse, différentes.

### Description d'un mode de réalisation

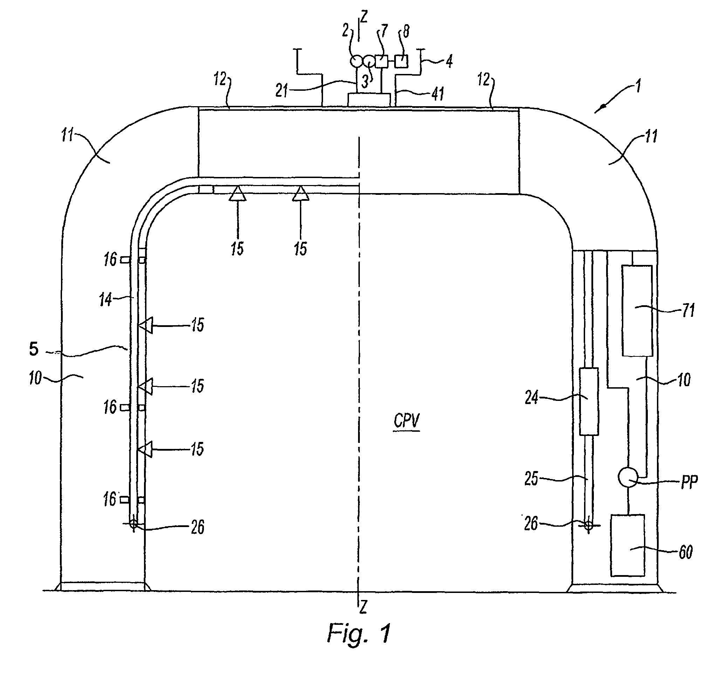

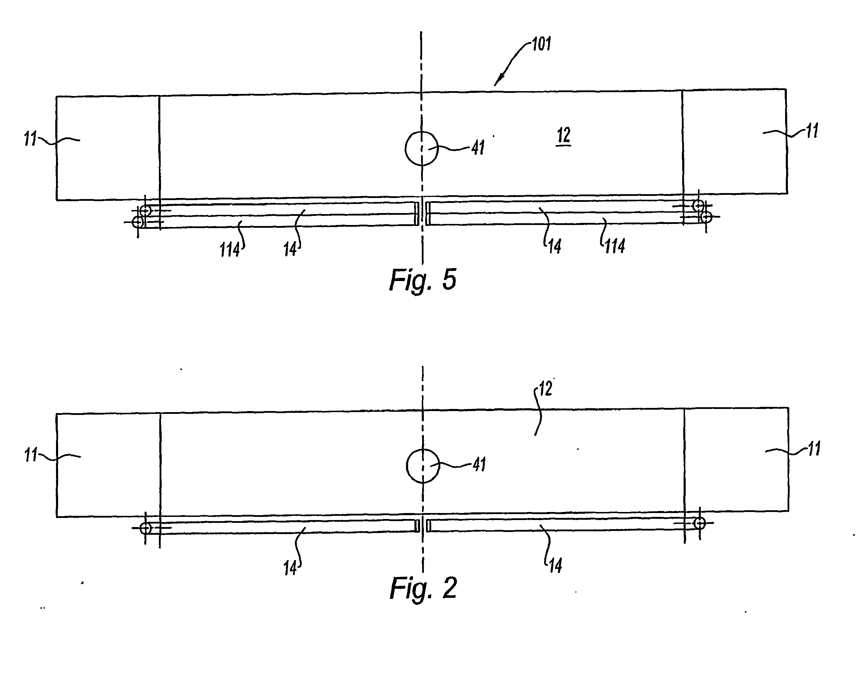

Selon les figures 1 et 2, l'invention concerne un module de tunnel de lavage 1 ayant une structure en forme d'arceau chevauchant le chemin de passage des véhicules à laver.

Plusieurs modules sont installés les uns à la suite des autres sur la ligne de passage des véhicules dans le tunnel. Ces modules assurent chacun une certaine fonction et leurs équipements peuvent varier d'un module à l'autre. Les modules effectuent principalement trois fonctions : le lavage haute pression, le lavage haute pression combiné à un lavage à rouleaux et le lavage haute pression avec lustrage. Les modules sont adaptés à chaque fonction par leurs équipements et les produits de prélavage/lavage/lustrage qu'ils utilisent. Ils sont commandés par la centrale de gestion en fonction du programme demandé par le client à l'entrée du tunnel.

Un exemple de module polyvalent 1 sera décrit ci-après dans deux variantes.

Par convention, la façade ou face avant du module 1 est la face tournée vers l'avant du véhicule arrivant dans le tunnel.

Le module 1, symétrique par rapport au plan médian ZZ, se compose de deux montants 10 reliés par des coudes 11 à une traverse 12.

Le module 1 est alimenté en eau, en air comprimé et en énergie et il reçoit les signaux de commande, par l'intermédiaire de conduites 2, 3 et de câbles 7, 8 installés dans un chemin de distribution 4 situé au-dessus de la ligne de passage des véhicules CPV. Cette ligne de passage est perpendiculaire au plan de la figure 1.

Le module 1 est équipé d'une rampe de distribution de mousse 5 formée de deux branches 14 symétriques par rapport au plan ZZ. Les branches 14 issues de la base des montants 10 suivent sensiblement le contour de l'arceau, par une partie rectiligne montante, puis une partie en arc de cercle pour rejoindre une partie horizontale sur la traverse 12.

Les branches 14 sont munies de buses de pulvérisation de mousse 15. Le nombre de buses 15 et leur répartition le long de la branche 14 dépendent de la fonction du module 1, c'est-à-dire du produit qu'il distribue et du lavage, nettoyage ou polissage à effectuer par le module ou en aval de celui-ci

Les buses 15 sont dirigées dans le plan de la figure ; elles sont issues latéralement de la conduite de chacune des branches 14. Seule une moitié de cette installation est représentée à la figure 1.

La vue de dessus de la figure 2 montre la disposition des branches 14 par rapport à la façade du module 1.

Chaque branche 14 est une conduite de distribution de mousse de grande section, réalisée en matière plastique transparente, de préférence en une seule pièce, cintrée, de façon à permettre le contrôle de l'arrivée et de la distribution de la mousse. Dans le cas d'une mousse teintée, selon la fonction de la mousse ou de l'opération à effectuer, la couleur permet un contrôle supplémentaire.

La conduite de distribution formant chaque branche 14 est installée dans des colliers 16 de préférence également transparents, en matière plastique de sorte que l'ensemble peut être éclairé pour souligner le fonctionnement du module.

La figure 1 montre, dans sa partie gauche, la façade avant du module 1 avec la branche gauche 14 de la rampe de distribution de mousse et la moitié droite du module, tel qu'il apparaît vu de l'arrière, c'est-à-dire à l'opposé de la façade équipée de la branche de distribution représentée ici.

En réalité, les deux moitiés du module 1 sont quasiment symétriques et chaque façade est équipée d'une branche 14 de la rampe de distribution de mousse et l'intérieur de chaque moitié de module loge des conduites et équipements tels que décrits ci-dessous. Toutefois, dans le cas d'une rampe de distribution en deux branches, pour distribuer un seul produit, il n'y a qu'un bidon de produit et une pompe de dosage de produit d'un côté. L'armoire électrique n'existe également que d'un côté.

Les différents circuits d'alimentation de fluides et de commandes, l'alimentation en eau (E), 2, l'alimentation en air comprimé (A),3 et celle de courant électrique 7 ainsi que la ligne de commande de type bus 8 passent dans le chemin de distribution 4 situé au-dessus du tunnel de lavage et indépendamment de celui-ci. Au niveau de chaque emplacement de module ou portique, il y a des branchements permettant le fonctionnement du module.

Le module 1 a une cheminée 41 reliée au chemin de distribution 4 par laquelle passent toutes les conduites et les câbles électriques du module 1 ; de façon analogue, les autres modules du tunnel sont alimentés à partir du chemin de distribution, chacun par une cheminée assurant la protection mécanique des conduites et câbles.

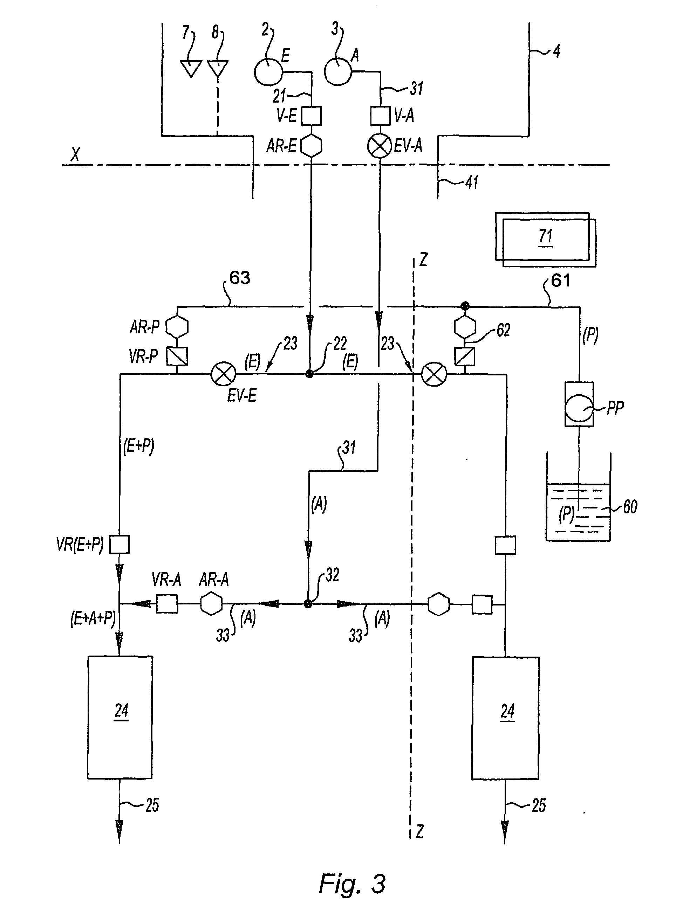

Selon la figure 3, de façon plus détaillée, partant de la conduite de distribution d'eau 2 dans le chemin de distribution 4, un branchement 21 descend dans la cheminée 41 du module. Ce branchement 21 est muni d'une vanne d'arrêt VE permettant de couper l'alimentation en eau (E) du module 1 pour les interventions sur toute la partie en aval. Cela permet de prévoir, au moment de la réalisation du tunnel, un certain nombre de branchements pour la totalité des cas possibles et ensuite d'adapter le tunnel, c'est-à-dire les modules, à une réalisation particulière. Cela permet également de supprimer si nécessaire, un module pour simplifier le tunnel tout en conservant le branchement en attente.

En aval de la vanne d'arrêt VE, la conduite d'eau 21 est équipée d'un clapet anti-retour AR-E, puis d'un té de répartition 22 relié aux conduites 23 des deux branches 14, alimentant chacune un mousseur 24 par l'intermédiaire d'une électrovanne d'eau EV-E et d'une vanne de réglage VR (E+P).

Le conduite d'air comprimé (A) 3 a un branchement 31 muni d'une vanne V-A permettant de couper le branchement 31 ; cette vanne est suivie d'une électrovanne EV-A pour commander l'alimentation en air comprimé des mousseurs 24 par la conduite d'air comprimé 31 munie d'un té de distribution 32 relié à deux conduites 33 associées chacune à une branche de l'installation. Chaque conduite 33 équipée d'un clapet anti-retour AR-A et d'une vanne de régulation VR-A, débouche dans la conduite 23 d'eau chargée de produit, en aval de sa vanne de réglage VR (E+P) et amont du mousseur 24. la distribution de produit P ajouté à l'eau E se fait dans la conduite 23 en aval de l'électrovanne EV-E.

Le produit P est pompé par une pompe électrique de dosage PP dans un bidon 60 de produit (P) placé au fond de l'un des montants 10. Le débit de la pompe est commandé selon les paramètres de fonctionnement du module.

La pompe PP débite le produit P dans une conduite 61 se divisant en deux branches 62, 63 munies chacune d'un clapet anti-retour AR-P et d'une vanne de réglage VR-P avant de déboucher dans la conduite d'eau 23 après l'électrovanne EV-E. Ainsi, le produit (P) peut ainsi bien se mélanger à l'eau (E) avant l'arrivée d'air, en amont du mousseur 24.

La commande des électrovannes EV-E, EV-A et de la pompe de dosage PP est assurée à partir de l'armoire électrique 71 reliée à la ligne d'alimentation électrique 7 et à la ligne de commande 8 passant dans le chemin de distribution 4. Des branchements descendent à partir du chemin de distribution 4 dans la cheminée 41, puis dans la traverse 12, l'armoire électrique 71. De façon à simplifier l'installation, même si les moyens sont dédoublé c'est-à-dire associés à chaque moitié de l'installation, la pompe de dosage PP et l'armoire électrique 71 ne sont prévus que dans l'un des deux montants 10 du module 1.

La commande des différents modules de l'installation est assurée par la centrale de commande du tunnel de lavage.

Les équipements logés dans le module sont accessibles par des portes fermant la face arrière des montants 10 et par une trappe au niveau de la traverse 12.

Le module 1 est réalisé, de préférence, par l'assemblage d'éléments constitués chaque fois par un montant droit 10, son coude 11 et la traverse 12 reliant les deux coudes 11 de deux montants 10. Ces différents éléments sont constitués par des parois fixes sur trois côtés : la façade, le côté intérieur et le côté extérieur de l'élément, alors que la face arrière est fermée par une porte. L'élément constituant le coude 11 est fermé sur ses quatre faces. Enfin, la traverse 12 est ouverte sur la face arrière, munie d'une trappe d'accès au volet et le dessus de la traverse porte la cheminée rejoignant le dessous du chemin de distribution. Ces éléments 10, 11, 12 sont, de préférence, réalisés en tôle inox et sont assemblés sur place par vissage.

L'installation fonctionne comme suit :

Pour effectuer un programme de lavage sur leur véhicule avec le module (distribution de mousse), la centrale de gestion du tunnel, après avoir détecté l'arrivée du véhicule dans le module par des détecteurs non représentés et, en fonction du programme de lavage choisi par l'automobiliste, commande la mise en marche du module 1 en ouvrant les électrovannes EV-E de la conduite 21 pour libérer l'alimentation en eau (E) et l'électrovanne EV-A de la conduite d'air 31 pour libérer l'alimentation en air comprimé (A).

La commande agit également sur la pompe de dosage PP qui prend du produit (P) dans le bidon 60 et l'injecte dans les deux conduites 23 en aval des électrovannes EV-E. Le mélange eau-produit (E+P) arrive ensuite dans le mousseur 24. L'introduction du produit très en amont du mousseur 24 permet d'homogénéiser le mélange produit/eau pour que celui-ci soit aussi régulier que possible lorsqu'il arrive dans le mousseur 24.

Le passage de l'eau chargée de produit et d'air dans le mousseur 24 forme la mousse ; le mousseur contient une charge de manière à intégrer mécaniquement, par effet de passage du liquide et de l'air et former une mousse. La mousse sort du mousseur dans la conduite 25, de forte dimension, pour descendre, traverser le connecteur 26 et remonter dans la branche de distribution 14 pour être projetée sur le véhicule par les buses de distribution 15. Sauf exception, cette distribution se fait de manière symétrique des deux côtés du module 1.

Le fonctionnement des électrovannes EV-E, EV-A et de la pompe de dosage PP est géré à partir de la centrale. A la fin de l'opération, la pompe de dosage PP est arrêtée puis, les électrovannes EV-E, EV-A sont fermées et la distribution de mousse s'arrête.

En amont du mousseur 24, les vannes d'équilibrage VR(E+P) permettent d'équilibrer la distribution de l'eau et de produit (E+P) entre les deux moitiés du module 1 pour que cette distribution soit régulière, quelles que soient les pertes de charge qui peuvent être irrégulières, dans les deux branches 14.

La vanne de réglage d'air VR-A permet de régler la quantité d'air introduite pour former la mousse, c'est-à-dire la densité de la mousse.

En aval du mousseur 24, la conduite de gros diamètre 25 reliée au connecteur 26 à la base du montant, transparente, permet de contrôler la mousse formée en agissant sur la vanne de réglage d'air VR-A.

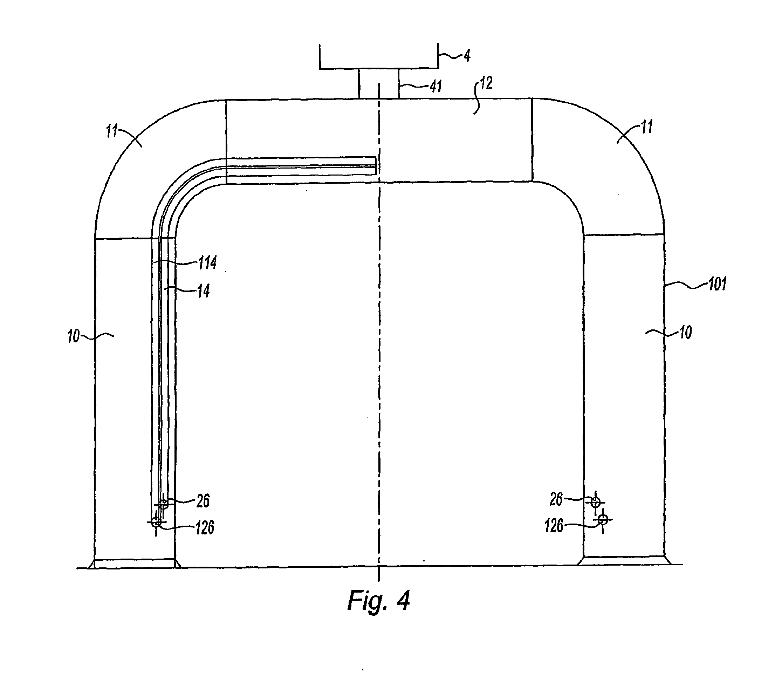

La figure 4 montre une vue de face d'une variante de module 101 dans laquelle la façade est occupée par deux rampes de distribution de mousse avec deux branches 14, 114 pour chaque moitié du module 101. Ces branches suivent des chemins parallèles et sont, de préférence, fixées dans des colliers jumelés. Les branches 14, 114 sont décalées l'une par rapport à l'autre comme le montre la vue de dessus de la figure 5 pour que les buses non représentées, puissent projeter leur jet de mousse dans la direction du plan vertical médian de chaque groupe de deux branches. L'orientation et la forme des jets sont réglables en fonction de la mousse.

L'équipement interne de ce module 101 n'est pas représenté. Il est en fait constitué par un équipement dédoublé comme celui présenté dans la figure 3. A chaque branche de distribution de mousse 14, 114 est associé un mousseur et l'alimentation de chaque mousseur en mélange eau, produit et air comprimé est indépendante puisque les produits sont différents.

La figure 5 est une vue de dessus du module 101 de la figure 4, montrant le décalage des rampes 14, 114 des deux côtés de la façade du module.

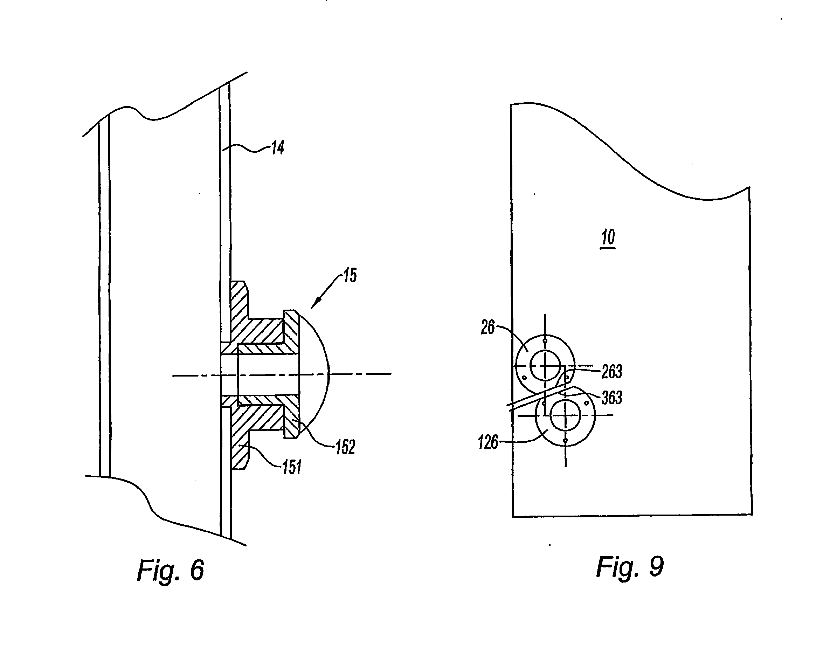

La figure 6 est une vue en coupe axiale de la conduite de distribution de mousse de la branche 14 au niveau d'une buse de pulvérisation 15. La buse se compose d'un support de base 151 à collerette, fixé à la conduite 14 autour d'un perçage et il reçoit un embout 152, vissé dans le support 151. Cet embout qui constitue le pulvérisateur proprement dit, a une forme adaptée à la forme du jet à réaliser. L'embout 152 est également orientable par rapport au support 151 suivant l'axe, de façon à étaler et à diriger le jet notamment en forme d'éventail suivant l'inclinaison souhaitée.

Bien qu'en général, le jet soit en éventail dans un plan vertical, d'autres formes de jet et directions sont possibles suivant que le jet est directionnel, par exemple, des jets destinés à distribuer la mousse sur les jante des roues ou le bas de la caisse.

Le support 151 est fixé à la conduite 14 constituant la branche de distribution de mousse ; l'embout 152 est l'élément amovible, par exemple vissé ou enclipsé dans le support 151.

Le canal de passage constitué par la buse de pulvérisation 15 a une forme aussi continue que possible de manière à ne pas détruire la structure de la mousse distribuée par la conduite 14.

Dans le cas d'une distribution de deux mousses comme le permet le module équipé comme celui des figures 4 et 5, les moyens sont dédoublés : il y a deux bidons de produit avec chaque fois une pompe et deux branches de mélange, en aval des électrovannes pour commander l'une ou l'autre branche et former la mousse dans un mousseur particulier.

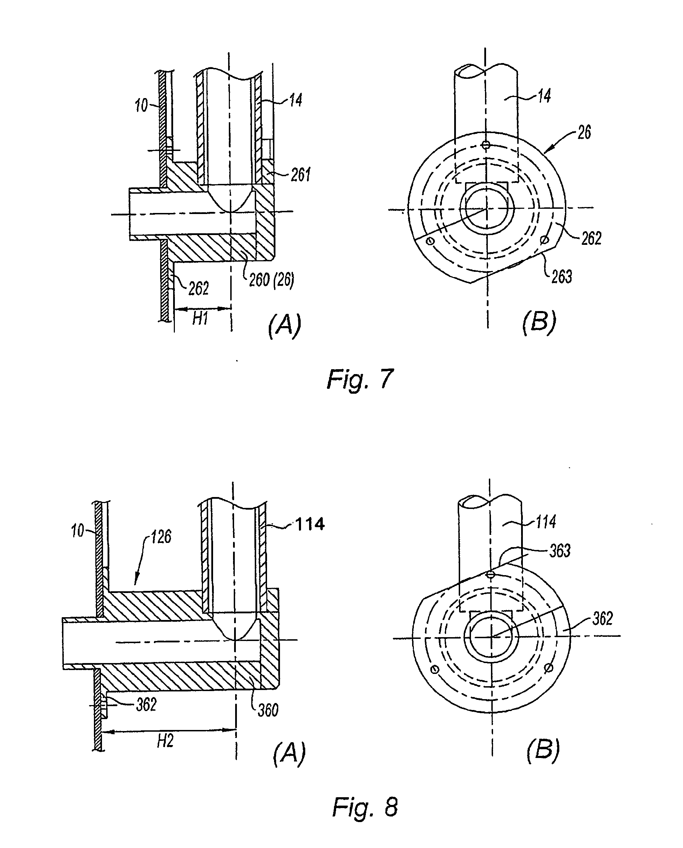

La figure 7A montre une vue en coupe d'un connecteur 26 installé dans la façade d'un montant 10. Ce connecteur traverse la paroi de la façade pour être relié du côté gauche à l'intérieur du montant, au tube de grand diamètre venant du mousseur. Cette conduite n'est pas représentée. Le connecteur 26 dont le corps 260 est situé à l'extérieur de la façade, forme un coude avec un logement 261 dans sa partie supérieure pour recevoir l'extrémité inférieure de la branche de distribution de mousse 14. L'axe du logement 261 recevant la conduite de ce connecteur est une certaine distance H1 par rapport à la façade du montant 10.

La figure 7B montre une vue de face du connecteur 26 auquel est reliée l'extrémité inférieure de la conduite de distribution de mousse 14. La collerette 262 du corps 160 a une partie tronquée 263.

Les figures 8A, 8B montrent un connecteur 126 analogue à celui (26) des figures 7A-B mais dont la distance H2 par rapport à la façade du montant 10 est augmentée de manière à pouvoir combiner ce connecteur 126 au connecteur 26 de la figure 7 et à proximité de celui-ci, dans une installation à branches 14, 114 dédoublées comme le mode de réalisation des figures 4 et 5.

Cela permet de rapprocher les connecteurs 26, 126 par leurs collerettes 262, 362 par leurs parties tronquées 263, 363 comme le montre la vue schématique de la figure 9 pour réduire l'encombrement non seulement des connecteurs mais également de l'installation à l'intérieur du montant et aussi celle des deux branches en façade (figure 3) et surtout de rapprocher les conduites 14, 114 aussi près que possible du passage du véhicule dans le module.

## Revendications

1. Module de tunnel (1) de lavage composé d'une structure en forme d'arceau constituant un caisson, logeant l'alimentation en eau (E), en air comprimé (A) en produits de prélavage/lavage, une armoire électrique, une pompe de produits (PP), un mousseur (24) et une rampe de distribution de mousse équipée de buses de pulvérisation,
**caractérisé en ce que**
- la rampe de distribution de mousse (4) est en deux branches de distribution (14), symétriques, associées chacune à une moitié du module (1),
chacune des branches (14) comprenant une conduite (25) de grand diamètre partant du mousseur (24) à la base à l'intérieur du montant (10) de l'arceau, et
- une conduite (14) à l'extérieur, en façade du module (1), partant de la base du montant (10) jusque sur la traverse (12) de l'arceau formant la branche de distribution munie de buses de distribution de mousse (15).

2. Module selon la revendication 1,
**caractérisé en ce que**
l'alimentation en eau (E) se fait par le dessus du module (1) au niveau de la traverse (12) et comprend, dans le sens d'arrivée de l'eau, un branchement (21) sur la conduite générale (2) avec une vanne d'arrêt (V-E) et un clapet anti-retour (AR-E) suivis d'un té (22) relié aux deux branches (23), chaque branche ayant une électrovanne (EV-E) suivie d'une vanne de réglage (VR) (E+P) de débit,
un embranchement d'arrivée de produit (P) en aval de l'électrovanne (EV-E) et en amont de la vanne de réglage (VR) (E+P),
un embranchement d'arrivée d'air comprimé (A) en aval de la vanne de réglage (VR) (E+P) et en amont du mousseur (24).

3. Module selon la revendication 2,
**caractérisé par**
une alimentation en produit (P) ayant une pompe (PP) commandée, reliée par un bidon de produit (60) et débitant celui-ci de façon commandée par deux conduites respectives (62) munies chacune d'un clapet anti-retour (AR-P) et d'une vanne de réglage (VR-P).

4. Module selon la revendication 2,
**caractérisé par**
une alimentation en air comprimé (A) partant de la conduite générale (3) par un embranchement (31) muni d'une vanne d'arrêt (V-A) et d'une électrovanne (EV-A) puis d'un té (32) relié à deux conduites (33) respectives, associées chacune à une branche (23), et munies chacune d'un clapet anti-retour (AR-R) et d'une vanne de réglage (VR-A) pour déboucher dans la conduite (23) dans laquelle passe le mélange eau + produit (E+P)

5. Module selon les revendications 1 et 2,
**caractérisé par**
une cheminée (41) fixée à la traverse (12) sur le dessus du module (1) et reliant le dessus de la traverse à un chemin de distribution (4) installé au-dessus du tunnel de lavage pour le passage des conduites d'eau (21) et d'air comprimé (31), des câbles d'alimentation électriques et des câbles de commande (7, 8), une dérivation étant prévue chaque fois au niveau du chemin de distribution pour passer dans la cheminée et entrer dans le module.

6. Module selon la revendication 1,
**caractérisé en ce qu'**
il comporte un connecteur (26) de grand diamètre fixé dans la façade du montant (10) pour traverser la façade et recevoir du côté intérieur, la conduite de grand diamètre (25) sortant du mousseur (24) et du côté extérieur, la conduite de grand diamètre de la branche (14)de distribution de mousse.

7. Module selon la revendication 1,
**caractérisé en ce que**
la conduite formant la branche (14) de distribution de mousse en façade du module est réalisée en matière plastique transparente.

8. Module selon la revendication 1,
**caractérisé en ce que**
la conduite (25) reliant le mousseur (24) au connecteur (26) à l'intérieur du montant (10) du module est réalisée en matière plastique transparente.

9. Module selon la revendication 1,
**caractérisé en ce qu'**
il comporte deux rampes de distribution de mousse (14, 114), installées en parallèle et de manière décalée en façade du module (1) pour distribuer chacune une mousse de fonction différente, chaque rampe étant formée de deux branches distinctes, symétriques.

10. Module selon la revendication 1,
**caractérisé en ce que**
le module (1) est formé d'un assemblage éléments (10, 11, 12) en acier inox.

11. Module selon la revendication 1,
**caractérisé en ce que**
les buses de distribution de mousse (15) sont formées d'un support de base (151) fixé à la conduite (14) et d'un embout (152) vissé dans le support de base (151).

## Claims

1. A washing tunnel module (1) comprising an arc-shaped structure forming a casing which houses the supply of water (E), compressed air (A) and prewashing/washing products, an electrical cabinet, a product pump (PP), a foaming device (24) and a foam distribution bank equipped with spraying nozzles,
**characterized in that**
- the foam distribution bank (4) is in the form of two symmetrical distribution branches (14), each associated with one half of the module (1),
each of the branches (14) comprising a large diameter duct (25) starting from the foaming device (24) at the base on the inside of the pillar of the arc (10), and
- a duct (14) on the outside, at the façade of the module (1), leading from the base of the pillar (10) and onto the crossbeam of the arc (12) forming the distribution branch equipped with foam distribution nozzles (15).

2. A module according to claim 1,
**characterized in that**
the supply of water (E) takes place via the top of the module (1) in the region of the crossbeam (12) and comprises, in the direction of entry of the water, a branching (21) on the general duct (2) with a stop valve (V-E) and a non-return valve (AR-E) which are followed by a T-piece (22) connected to the two branches (23), each branch having a solenoid valve (EV-E) followed by a flow regulating valve (VR) (E+P),
an entry branching for product (P) downstream of the solenoid valve (EV-E) and upstream of the regulating valve (VR) (E+P),
an entry branching for compressed air (A) downstream of the regulating valve (VR) (E+P) and upstream of the foaming device (24).

3. A module according to claim 2,
**characterized by**
a supply of product (P) having a controlled pump (PP), connected via a can (60) of product and delivering the latter in a controlled manner via two respective ducts (62), each equipped with a non-return valve (AR-P) and with a regulating valve (VR-P).

4. A module according to claim 2,
**characterized by**
a supply of compressed air (A) starting from the general duct (3) via a branching (31) equipped with a stop valve (V-A) and with a solenoid valve (EV-A) then with a T-piece (32) connected to two respective ducts (33), each associated with one branch (23), and each equipped with a non-return valve (AR-R) and with a regulating valve (VR-A) in order to open out into the duct (23) in which the water + product mixture (E+P) passes.

5. A module according to claims 1 and 2,
**characterized by**
a chimney (41) fixed to the crossbeam (12) on the top of the module (1) and connecting the top of the crossbeam to a distribution pathway (4) installed above the washing tunnel for the passage of the ducts for water (21) and compressed air (31), the electrical supply cables and the control cables (7, 8), a branch conduit being provided each time in the region of the distribution pathway in order to pass into the chimney and enter the module.

6. A module according to claim 1,
**characterized in that**
it includes a large diameter connector (26) fixed in the facade of the pillar (10) in order to pass through the façade and receive on the inner side the large diameter duct (25) leaving the foaming device (24) and on the outer side the large diameter duct of the foam distribution branch (14).

7. A module according to claim 1,
**characterized in that**
the duct forming the foam distribution branch (14) at the façade of the module is made of transparent plastics material.

8. A module according to claim 1,
**characterized in that**
the duct (25) connecting the foaming device (24) to the connector (26) inside the pillar (10) of the module is made of transparent plastics material.

9. A module according to claim 1,
**characterized in that**
it comprises two foam distribution banks (14, 114) installed in parallel and offset at the façade of the module (1), each for distributing a foam having a different function, each bank being formed of two separate symmetrical branches.

10. A module according to claim 1,
**characterized in that**
the module (1) is formed of an assembly of elements (10, 11, 12) made of stainless steel.

11. A module according to claim 1,
**characterized in that**
the foam distribution nozzles (15) are formed of a base support (151) fixed to the duct (14) and of an endpiece (152) screwed into the base support (151).

## Patentansprüche

1. Modul für Waschtunnel (1), bestehend aus einer Einrichtung in Form eines ein Gehäuse bildenden kleinen Brückenbogens, das Platz bietet für die Wasserversorgung (E), die Druckluftversorgung (A), die Versorgung mit Mitteln für die Vorwäsche/Hauptwäsche, einen Schaltschrank, eine Pumpe für die Mittel (PP), einen Schaumerzeuger (24) und ein mit Zerstäubungsdüsen ausgestattetes Leitungssystem zur Schaumverteilung,
**dadurch gekennzeichnet, dass**
- es sich bei dem Leitungssystem zur Schaumverteilung (4) um zwei symmetrische Verteilungszweige (14) handelt, die e-weils an einer Hälfte des Moduls (1) angebracht sind, wobei jeder der Zweige (14) eine Leitung (25) mit großem Durchmesser, die innen am Fuß der Säule (10) des kleinen Brückenbogens vom Schaumerzeuger (24) ausgeht, und
- eine Leitung (14) außen an der Vorderseite des Moduls (1) umfasst, die vom Fuß der Säule (10) bis zur Traverse (12) des kleinen Brückenbogens führt und den mit Schaumverteilungsdüsen (15) ausgestatteten Verteilungszweig bildet.

2. Modul nach Anspruch 1,
**dadurch gekennzeichnet, dass**
die Versorgung mit Wasser (E) von der Oberseite des Moduls (1) auf der Höhe der Traverse (12) des kleinen Brückenbogens erfolgt und, in Richtung der Wasserzuführung gesehen, Folgendes umfasst:
eine Abzweigung (21) von der Hauptleitung (2) mit eine Absperrventil (V-E) und einem Rückschlagventil (AR-E), gefolgt von einem mit den beiden Zweigen (23) verbundenem T-Stück (22), wobei jeder Zweig ein Magnetventil (EV-E) aufweist, dem ein Stellventil (VR)(E+P) für die Durchflussmenge folgt,
einen Anschluss für die Zuführung des Mittels (P), der dem Magnetventil (EV-E) nachgeordnet und dem Stellventil (VR) (E+P) vorgeordnet ist,
einen Anschluss für die Zufuhrung von Druckluft (A), der dem Stellventil (VR)(E+P) nachgeordnet und dem Schaumerzeuger (24) vorgeordnet ist.

3. Modul nach Anspruch 2,
**gekennzeichnet durch** eine Versorgung mit einem Mittel (P), wofür eine gesteuerte, mit einem Mittel-Behälter (60) verbundene Pumpe (PP) vorgesehen ist, die dieses Mittel auf gessteuerte Weise **durch** zwei beiderseitige Leitungen (62) fördert, die jeweils mit einem Rückschlagventil (AR-P) und einem Stellventil (VR-P) ausgestattet sind.

4. Modul nach Anspruch 2,
**gekennzeichnet durch** eine Versorgung mit Druckluft (A) aus der Hauptleitung (3) mit Hilfe einer Abzweigung (31), die mit einem Absperrventil (V-A) und einem Magnetventil (EV-A) und dann einem mit zwei beiderseitigen Leitungen (33) verbundenen T-Stück (32) versehen ist, die jeweils mit einem Zweig (23) verbunden und jeweils mit einem Rückschlagventil (AR-R) und einem Stellventil (VR-A) versehen sind, um in die Leitung (23) einzumünden, in der die Mischung aus Wasser und Mittel (E+P) fließt.

5. Modul nach Anspruch 1 und 2,
**gekennzeichnet durch** einen Stutzen (41), der an der Traverse (12) auf der Oberseite des Moduls (1) befestigt und die Oberseite der Traverse mit einem Verteilerkanal (4) vereindet, der oberhalb des Waschtunnels für die Verlegung der Leitungen für Wasser (21) und Druckluft (31), der elektrischen Stromversorgungskabel und der Steuerungskabel (7, 8) installiert ist, wobei jedes Mal auf der Höhe des Verteilerkanals eine Abzweigung vorgesehen ist, um in den Stutzen zu gelangen und in das Modul hineinzukommen.

6. Modul nach Anspruch 1,
**dadurch gekennzeichnet, dass** es einen Anschluss (26) mit großem Durchmesser aufweiset, der an der Vorderseite der Säule (10) befestigt ist, um die Vorderseite zu durchqueren und auf der Innenseite die vom Schaumerzeuger (24) ausgehende Leitung mit großem Durchmesser (25) und auf der Außenseite die Leitung mit großem Durchmesser (14) des Schaumverteilungszweiges (14) anzuschließen.

7. Modul nach Anspruch 1,
**dadurch gekennzeichnet, dass** die den Zweig (14) der Schaumverteilung auf der Vorderseite des Moduls bildende Leitung aus durchsichtigem Kunststoff hergestellt ist.

8. Modul nach Anspruch 1,
**dadurch gekennzeichnet, dass** die den Schaumerzeuger (24) mit dem Anschluss (26) im Inneren der Säule (10) des Moduls verbindende Leitung (25) aus durchsichtigem Kunststoff hergestellt ist.

9. Modul nach Anspruch 1,
**dadurch gekennzeichnet, dass** es zwei an seiner Vorderseite parallel und auf versetzte Weise installierte Leitungssysteme zur Schaumverteilung (14, 114) aufweist, um jeweils einen Schaum mit unterschiedlicher Wirkung zu verteilen, wobei jedes System von zwei einzelne symmetrischen Zweigen gebildet ist.

10. Modul nach Anspruch 1,
**dadurch gekennzeichnet, dass** das Modul (1) aus zusammengefügten Elementen (10, 11, 12) aus nichtrostendem Stahl besteht.

11. Modul nach Anspruch 1,
**dadurch gekennzeichnet, dass** die Schaumverteilungsdüsen (15) von einem an der Leitung (14) befestigten Haltesockel (151) und einem in den Haltesockel (151) eingeschraubten Stutzen (152) gebildet sind.
